# EUROPÄISCHE PATENTANMELDUNG

(11) **EP 0 676 347 A1**
(43) Veröffentlichungstag der Anmeldung: **11.10.1995**
(21) Anmeldenummer: 95105123.4
(22) Anmeldetag: 05.04.1995
(51) Int. Cl.: B65G 67/06, B65G 69/18

(54) **Vorrichtung zum Verbinden einer stationären Schüttgutquelle mit einer längs einer vorbestimmten Ladestrecke verfahrbaren Ladeeinrichtung**

(30) Priorität: 05.04.1994 DE 9405653 U
(71) Anmelder: Babcock Materials Handling Division GmbH, D-21614 Buxtehude (DE)
(72) Erfinder: Kleibs, Reinhard, Dipl.-Ing., D-21614 Buxtehude (DE)
(74) Vertreter: Glawe, Delfs, Moll & Partner

(57) **Zusammenfassung**

Die Erfindung betrifft eine Vorrichtung zum Verbinden einer stationären Schüttgutquelle (15) mit einer längs einer vorbestimmten Ladestrecke verfahrbaren Ladeeinrichtung (6 bis 13). Mit der Quelle ist das obere Ende einer geneigten, pneumatischen Förderrinne (16) schwenkbeweglich verbunden, deren unteres Ende mit einem Schurrenrohr (30) verbunden ist, das seinerseits an die Ladeeinrichtung angeschlossen ist. Das Schurrenrohr wird von einem Außenrohr (33) umgeben, das zur Rückführung von Staubluft von der Ladeeinrichtung zur pneumatischen Förderrinne dient. Die horizontale Länge der pneumatischen Förderrinne (16) ist etwa um die horizontale Länge des geneigt verlaufenden Schurrenrohrs länger als der geringste Abstand bzw. kürzer als der größte Abstand einer Ladestelle von der Quelle (15).

## Beschreibung

Die Erfindung bezieht sich auf eine Vorrichtung nach dem Gattungsbegriff des Anspruchs 1. Diesem liegt die DE-C 12 18 941, die eine Vorrichtung zum Verbinden einer stationären Schüttgutquelle, beispielsweise eines Siloauslasses, mit längs einer vorbestimmten Ladestrecke an wechselnder Ladestelle befindlichen Ladeeinrichtung zeigt. Die Ladeeinrichtung dient beispielsweise zum Befüllen von LKW-Transportbehältern, deren Füllstutzen sich längs einer für die Fahrzeuge vorgesehenen Füllstrecke an unterschiedlicher Stelle befinden können. Die bekannte Vorrichtung setzt sich aus zwei pneumatischen Förderrinnen zusammen, die gelenkig jeweils mit der Quelle, miteinander und der Ladeeinrichtung verbunden sind. Pneumatische Förderrinnen zeichnen sich dadurch aus, daß ihr Boden von einer luftdurchlässigen Schicht gebildet wird, die von unten mit Druckluft beaufschlagt wird, die das über der Schicht befindliche Schüttgut fließfähig macht. Pneumatische Förderrinnen sind daher in der Lage, Schüttgut mit geringer Neigung und geringem Höhenverlust zu fördern. Der vertikale Platzbedarf der bekannten Vorrichtung ist im Verhältnis zur möglichen Förderweite daher wesentlich geringer als derjenige einer anderen bekannten Vorrichtung (DE-A 27 01 343), die sich von der soeben erläuterten nur dadurch unterscheidet, daß die Gefälleförderer belüftungsfrei als Rohrschurren ausgeführt sind. In beiden Fällen bilden die Gefälleförderer nicht nur einen Förderquerschnitt für das Fördergut mit Förderrichtung von oben nach unten, sondern auch noch einen weiteren Förderquerschnitt für die Förderung von Staubluft von unten nach oben. Im Falle der pneumatischen Förderrinnen wird der Staubluft-Förderquerschnitt durch den Raum oberhalb des Gutbetts gebildet; eine Trennwand ist nicht erforderlich. Jedoch müssen die beiden Medien im Bereich der Schwenkverbindungen getrennt voneinander geführt werden. Im Falle der anderen bekannten Ausführung sind die Schurrenrohre, die der Förderung des Schüttguts dienen, jeweils von einem weiteren Rohr umgeben, das die Staubluft zurückführt. Die Ausführung mit pneumatischen Förderrinnen hat zwar einen geringeren Höhenbedarf, aber ist wesentlich kostspieliger als die andere Ausführung, was nicht zuletzt auf die komplizierten Schwenkverbindungsstücke zurückgeht, die zur schwenkbaren Verbindung der Förderer untereinander sowie mit der Quelle und der Ladevorrichtung dienen.

Der Erfindung liegt daher die Aufgabe zugrunde, eine weniger aufwendige Vorrichtung bei gleichfalls geringem Höhenbedarf zu schaffen.

Die erfindungsgemäße Lösung liegt in den Merkmalen des Anspruchs 1.

Ein Teil des Lösungsgedankens ist darin zu sehen, daß ein als pneumatische Förderrinne ausgebildeter Gefälleförderer mit einem als Schurre ausgebildeten Gefälleförderer kombiniert wird. Man sollte erwarten, daß die beiden Bauprinzipien jeweils ihre Vor- und Nachteile in die kombinierte Konstruktion einbringen. Dies ist aber überraschenderweise dann nicht der Fall, wenn der zweite Lösungsgedanke hinzutritt, denjenigen Gefälleförderabschnitt, der eine pneumatische Förderrinne enthält, mit großer horizontaler Länge und den anderen mit geringer auszuführen. Genauer gesagt, wird der erste Gefälleförderer, der mit der Schüttgutquelle verbunden ist, als pneumatische Förderrinne ausgebildet und mit einer Länge ausgestattet, die um die Förderlänge des zweiten Gefälleförderers länger ist als der kürzeste Abstand zwischen der Schüttgutquelle und der nächstgelegenen Ladestelle, bzw. sie wird um die Förderlänge des zweiten Gefälleförderers kürzer ausgebildet als der Abstand zwischen der Schüttgutquelle und der am weitesten entfernten Ladestelle.

Auf diese Weise nutzt die Erfindung das geringe Gefälle einer pneumatischen Förderrinne mit entsprechend geringem Höhenbedarf für den größten Teil der gesamten horizontalen Förderstrecke. Andererseits nutzt sie den geringen Bauaufwand, der bei Verwendung eines Schurrenrohrs insbesondere in den Verbindungsstücken notwendig ist, für den übrigen Teil der Förderstrecke. Zwar ist der Höhenbedarf des Schurrenrohrs wegen seines größeren erforderlichen Neigungswinkels vergleichsweise groß, wenn man ihn auf die horizontale Förderstrecke bezieht. Da diese aber in der erfindungsgemäßen Kombination klein ist, ist auch der dadurch entstehende Höhenbedarf gering. Er wird weitgehend dadurch wieder ausgeglichen, daß die Verbindungsstücke einen geringeren Höhenbedarf haben als bei der Verbindung zweier pneumatischer Förderleitungen bzw. beim Anschluß einer pneumatischen Förderleitung an die Ladeeinrichtung. Als weiterer Vorteil tritt hinzu, daß das Gewicht des zweiten Gefälleförderers, das im wesentlichen von dem die Ladeeinrichtung tragenden Wagen aufgenommen werden muß, gering ist und daher die bei dem Wechsel der Ladestelle zu bewegenden Massen geringer sind.

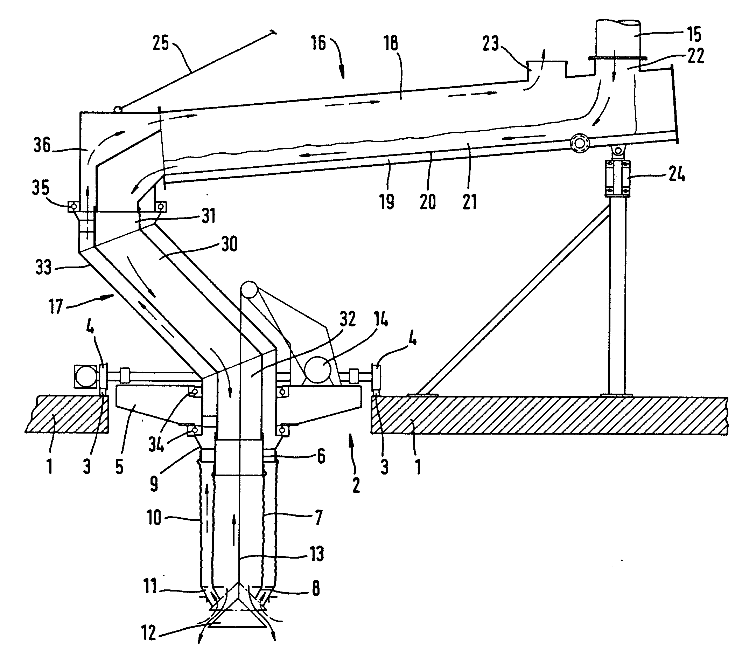

Die Erfindung wird im folgenden näher unter Bezugnahme auf die Zeichnung erläutert, die eine schematische Schnittansicht einer bevorzugten Ausführungsform veranschaulicht.

Die Gebäudedecke 1 enthält einen schlitzförmigen Ausschnitt 2, der sich über der Ladestrecke befindet, in welcher man sich die zu beladenden Behälter vorzustellen hat. Beiderseits am Rand des Ausschnitts 2 befinden sich Schienen 3 für die Räder 4 eines Wagens 5, die in nicht gezeigter, geeigneter Weise antreibbar und steuerbar sind.

Der Wagen 5 trägt eine Ladeeinrichtung. Für das Laden des Schüttguts besitzt sie ein Rohrstück 6, von dem ein längenveränderbarer Schlauch 7 herabhängt, der in einem Füllmundstück 8 endet. Diese Teile sind umgeben von einem Rohrstück 9, an das sich ein längenveränderbarer Schlauch 10 und ein Mundstück 11 anschließt, die dem Abzug von Staubluft aus dem zu befüllenden Behälter dienen. Die Mundstücke 8, 11 sind verschließbar mittels eines Verschlußkegels 12, der an einem Seil 13 hängt, das von einer Seilwinde 14 ausgeht. Der Verschlußkegel 12 kann durch Betätigen der Seilwinde 14 angehoben und gesenkt werden. Dadurch werden die Mundstücke 8, 11 nicht nur verschlossen und geöffnet, sondern auch angehoben bzw. auf einen Behälterstutzen abgesenkt.

Der Ladeeinrichtung ist das zu ladende Schüttgut von einer Schüttgutquelle her zuzuführen, die sich seitlich des Ausschnitts 2 und oberhalb der Gebäudedecke 1 befindet und durch einen Stutzen 15 angedeutet ist. Es kann sich dabei beispielsweise um einen Siloauslaß handeln. Die Verbindung wird hergestellt durch einen ersten Gefälleförderer 16 und einen zweiten Gefälleförderer 17.

Der erste Gefälleförderer 16 wird von einer geschlossenen, pneumatischen Förderrinne gebildet, die einen Oberkasten 18 zur Förderung des Schüttguts und zur Rückförderung der Staubluft einerseits und einen Unterkasten 19 für die Zuführung der Druckluft zu einer porösen Schicht 20 enthält, die das zu fördernde Schüttgutbett 21 trägt. Der Oberkasten weist einen Materialeinlaufstutzen 22 auf sowie einen Luftabfuhrstutzen 23. Koaxial unterhalb des Materialeinlaufstutzens 22 ist der Förderer von einer um eine vertikale Achse frei drehbaren Stütze 24 getragen. Der erste Förderer ist daher um die vertikale Achse des Materialeinlaufstutzens 22 schwenkbar.

Der zweite Gefälleförderer 17 wird bezüglich der Schüttgutförderung von einem Rohr 30 gebildet, das als Schurre ausgebildet ist; d.h. es vermag das Schüttgut ohne fluidisierende Belüftung allein aufgrund seines Gefälles zu fördern. Das Rohr 30 weist einen oberen, vertikal abgeknickten Stutzen 31 und einen unteren gleichfalls vertikal abgeknickten Stutzen 32 auf, wobei letzterer fluchtend und drehbar in das Rohrstück 6 der Ladeeinrichtung eingreift. Das Rohrstück 30 und dessen Stutzen 31, 32 sind umgeben von einem entsprechend gestalteten Außenrohr 33 und mit diesem fest verbunden. Der Zwischenraum dient, wie durch Pfeile angedeutet, der Staubluftförderung. Er ist an das Rohrstück 9 der Ladeeinrichtung angeschlossen. Die Teile 30-33 bilden eine starre Einheit und werden von dem Wagen 5 über Lager 34 drehbar getragen.

Das untere Ende des ersten Gefälleförderers 16 ist mit dem oberen Ende des zweiten Gefälleförderers 17 über ein mittels des Drehlagers 35 verschwenkbares Verbindungsstück 36 verbunden, das das auf der luftdurchlässigen Schicht 20 der pneumatischen Förderrinne ankommende Schüttgut 21 in den Rohrstutzen 31 und die im Zwischenraum zwischen den Rohren 30 und 33 ankommende Staubluft dem Rinnenoberraum 18 zuleitet.

Für die Aufnahme des Gewichts des Förderers 16 kann sein links in der Zeichnung erscheinendes Ende durch eine Abspannung 25, die zu einem oberhalb der Stütze 24 befindlichen Abspannpunkt führt, getragen sein. Da die Platzverhältnisse dies häufig nicht zulassen, ist vorgesehen, daß die Kräfte durch das Lager 35 aufgenommen werden.

Man erkennt bei der Betrachtung der Zeichnung ohne weiteres, daß der Höhenbedarf des ersten Gefälleförderer 16 wegen dessen geringer Neigung gering ist und daß auch der Höhenbedarf des zweiten Gefälleförderers 17 nicht groß ist, weil dessen Förderweite gering gehalten ist und seine für den Anschluß an das Verbindungsstück 36 einerseits und die Ladeeinrichtung andererseits benötigten Teile geringen Höhenbedarf haben. Die Erfindung verbindet somit die Vorteile der bekannten, jeweils auf pneumatischen Förderrinnen bzw. Schurrenförderung beruhenden Vorrichtungen, ohne deren Nachteile zu übernehmen.

## Patentansprüche

1. Vorrichtung zum Verbinden einer stationären Schüttgutquelle (15) mit einer längs einer vorbestimmten Ladestrecke verfahrbaren Ladeeinrichtung (6-13), wobei die Quelle (15) um eine vertikale Achse schwenkbeweglich mit dem oberen Ende eines als pneumatische Förderrinne ausgebildeten ersten Gefälleförderers (16), dessen unteres Ende um eine vertikale Achse schwenkbeweglich mit dem oberen Ende eines zweiten Gefälleförderers (17), dessen unteres Ende schwenkbeweglich mit der Ladeeinrichtung (6-13) verbunden ist, und wobei die Gefälleförderer (16,17) einen Förderquerschnitt zur Förderung des Schüttguts nach unten und einen anderen Förderquerschnitt zur Förderung von Staubluft in entgegengesetzter Richtung bilden, dadurch gekennzeichnet, daß der zweite Gefälleförderer (17) ein belüftungsfreies Schurrenrohr ist, dessen zur Schüttgutförderung bestimmtes Innenrohr unmittelbar drehbar an die Ladeeinrichtung (6-13) angeschlossen und mit einem zur Staubluftförderung bestimmten Rohr (33) verbunden ist, das gleichfalls unmittelbar an die Ladeeinrichtung (6-13) angeschlossen ist, und daß die horizontale Länge des ersten Gefälleförderers (16) etwa um die horizontale Länge des zweiten Gefälleförderers (16) länger als der geringste Abstand bzw. kürzer als der größte Abstand einer Ladestelle von der Quelle (15) ist.
